# EUROPÄISCHE PATENTSCHRIFT

(11) **EP 1 409 385 B1**
(45) Veröffentlichungstag und Bekanntmachung des Hinweises auf die Patenterteilung: **01.12.2004**
(21) Anmeldenummer: 02764670.2
(22) Anmeldetag: 11.07.2002
(51) Int. Cl.: B65G 51/03

(54) **LUFTFFÖRDERER**
PNEUMATIC CONVEYER
TRANSPORTEUR PNEUMATIQUE

(30) Priorität: 25.07.2001 DE 20112256 U
(43) Veröffentlichungstag der Anmeldung: 21.04.2004
(73) Patentinhaber: KRONES AG, 93068 Neutraubling (DE)
(72) Erfinder: SIXT, Alexander, 93086 Wörth/Donau (DE); SEIDL, Andreas, 93093 Donaustauf (DE); SIGLER, Markus, 93096 Köfering (DE)
(86) Internationale Anmeldenummer: PCT/EP2002/007719
(87) Internationale Veröffentlichungsnummer: WO 2003/011724

(56) Entgegenhaltungen:
- WO-A-99/10263
- US-A- 5 161 919

## Beschreibung

Die Erfindung betrifft einen Luftförderer zum Transport von Gegenständen mit einem Kragen und einem darüber befindlichen Kopf, insbesondere von Kunststoffflaschen, gemäß dem Oberbegriff des Anspruchs 1.

Ein derartiger Luftförderer ist aus der US 5 161 919 bekannt. Die schrägen seitlichen Wände des Kopfraums können hier ein übermäßiges Anheben und damit Verklemmen der Gegenstände zwischen den Tragleisten verhindern, wenn die Gegenstände ausreichend hoch sind. Dieser positiven Wirkung steht jedoch entgegen, dass die Luftdüsen zwingend unterhalb der Tragleisten angeordnet sind und am Rumpf der Gegenstände angreifen. Außerdem erfordert dies eine kostenintensive und sperrige Bauweise auf Grund des weit nach unten reichenden Luftkanals zur Versorgung der Luftdüsen, dessen Reinigung problematisch ist.

Bekannt ist weiterhin aus der WO 9910263 ein Förderer mit Tragleisten, über denen sich ein Kopfraum mit einem rechteckigen Querschnitt befindet, in den ein Füllstück eingesetzt ist. Durch das Füllstück soll eine Aufwärtsbewegung der Flaschen verhindert werden. Da das Füllstück jedoch in den Kopfraum als separates Teil eingesetzt wird, bildet es mit den Wandungen des Kopfraumes Spalte bzw. Ritzen und Abstufungen aus, was unter hygienischen Gesichtspunkten problematisch ist, weil solche Bereiche zu bleibenden Ablagerungen von Keimen führen können.

Keime müssen aber insbesondere im Getränkebereich bei abzufüllenden Flaschen unbedingt vermieden werden.

Der Erfindung liegt die Aufgabe zugrunde, einen Luftförderer zu schaffen, der ein Verkanten oder Verklemmen der Gegenstände zuverlässig verhindert, ohne dass dabei Nachteile insbesondere in hygienischer und kostenmäßiger Hinsicht in Kauf genommen werden müssen.

Diese Aufgabe wird durch die im Kennzeichen des Anspruchs 1 angegebenen Merkmale gelöst.

Dadurch, dass die Luftdüsen in den schrägen Seitenwänden des Kopfraums angeordnet sind, kann der Förderkanal bzw. Luftkanal auf den Raum oberhalb der Tragleisten begrenzt sein. Dadurch ergibt sich eine einfache Reinigung und ein kostengünstiger Aufbau. Außerdem wirkt diese Anordnung der Luftdüsen einem Entstehen von Verklemmungen entgegen. Da das Anheben der Flaschen allein durch die Gestaltung der schrägen Seitenwände -ohne Einsätze, Füllstücke oder dgl.- erfolgt ist auch von dieser Seite her eine einfache Reinigung und eine kostengünstige Konstruktion gesichert.

Im Folgenden werden Ausführungsbeispiele der erfindungsgemäßen Vorrichtung anhand der Zeichnungen weiter erläutert und beschrieben. Dabei zeigt:
- Fig. 1: ein erstes Ausführungsbeispiel eines Luftförderers in perspektivischer, schematisierter Teilansicht,
- Fig. 2: ein zweites Ausführungsbeispiel eines Luftförderers in derselben Ansicht wie Fig.1
- Fig. 3a bis Fig. 3b: einen Ausschnitt aus Fig.1 in verschiedenen Ausführungen
- Fig. 4: eine schematische Darstellung zur Erläuterung der Wirkungsweise des erfindungsgemäßen Luftförderers bei der Stauauflösung
- Fig. 5: ein drittes Ausführungsbeispiel eines Luftförderers im senkrechten Schnitt.

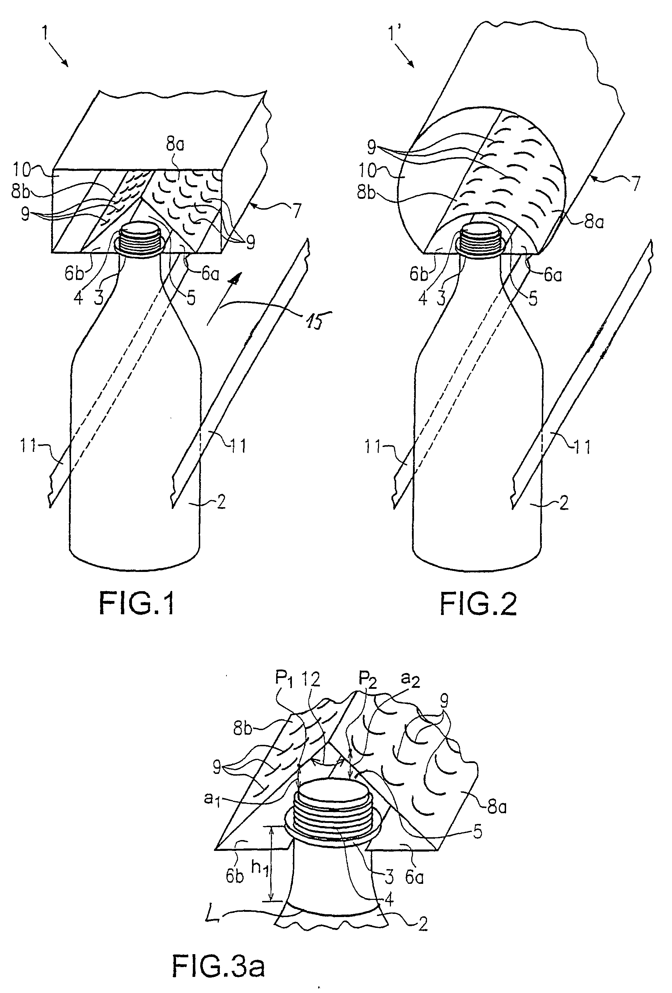

In Fig. 1 ist ein Luftförderer 1 gezeigt, mit dem die Gegenstände 2, hier PET-Kunststoffflaschen , transportiert werden sollen. Solche Flaschen haben einen Kragen 3 und einen Kopf 4, wobei an dem Kopf ein Gewinde zum Aufschrauben eines Verschlusses vorgesehen ist. Die Flasche 2 hängt mit ihrem Kragen 3 auf Tragleisten 6a und 6b. Die Tragleisten 6a und 6b begrenzen nach unten den Kopfraum 5, d.h. denjenigen Raum, in dem sich der Kopf 4 der Flasche beim Transport befindet.

Der Kopfraum 5 hat schräge Seitenwände 8a und 8b, die im oberen Bereich des Kopfraums 5 gewinkelt, insbesondere spitz, zusammenlaufen. Dadurch, dass die Seitenwände 8a und 8b nach innen geneigt sind, können sie als Anschlag zur Begrenzung des Anhebens oder des Kippens der Flaschen 2 dienen. Sollte durch den Luftstrom, durch andere Flaschen oder sonstige Einflüsse, eine Flasche 2 angehoben oder gekippt werden, so schlägt das obere Ende des Kopfes 4 von unten gegen die Seitenwände 8a und 8b und begrenzt somit das Anheben oder eine Kippbewegung und zwar noch bevor der sich erweiternde Flaschenhals zwischen den Tragleisten 6a, 6b verklemmen kann. Dies wird weiter unten noch näher erläutert.

In den Kopfraum 5 wird Luft durch Luftdüsen 9 in Form von Ausklinkungen gerichtet in Transportrichtung 15 eingeblasen, so dass die Flaschen 2 im Kopfteil 4 mit Luft beaufschlagt werden, wodurch sie in Bewegung versetzt bzw. in Bewegung gehalten werden.

Oberhalb des Kopfraums 5 befindet sich ein Luftzufuhrkanal 10, der aus einer nicht näher beschriebenen Luftdruckquelle mit Luft versorgt wird. Aus dem Luftzufuhrkanal 10 strömt die Luft durch die Düsen 9 und übt so eine Kraft für die Transportbewegung auf die Flasche 2 aus.

Im unteren Teil der Fig. 1 sind zusätzliche optionale seitliche Leiteinrichtungen 11 dargestellt, die dazu dienen, ein seitliches Verkippen der Flasche 2 zu verhindern.

Der dargestellte Förderkanal 7 umfasst also zumindest den Kopfraum 5 mit seinen schrägen Seitenwänden 8a,8b als seitliche Begrenzungen sowie die Tragleisten 6a, 6b, die den Kopfraum nach unten begrenzen.

Durch die Ausführung der seitlichen im Wesentlichen ebenen Seitenwände 8a und 8b als Anschläge ist eine besonders einfache und kostengünstige Herstellung des Luftförderers möglich. Ebenso ergibt sich durch die einfache Konstruktionsweise ein Kopfraum, der keine Ritzen und Spalten aufweist, in denen sich Keime aufhalten, vermehren und ausbreiten können. Die Reinigung eines erfindungsgemäßen Luftförderers ist durch diese Ausgestaltung des Kopfraums 5 sehr einfach.

In Fig. 2 ist eine weitere erfindungsgemäße Ausgestaltung eines Luftförderers 1' dargestellt. Funktional gleiche Bauteile sind mit demselben Bezugszeichen versehen.

Statt eines Kopfraums 5 mit einem dreieckigen Querschnitt, wie in Fig. 1 dargestellt, hat der Kopfraum 5 in Fig. 2 einen im Wesentlichen halbkreis- oder kreissegmentförmigen Querschnitt. Auch hier bilden die gewölbten Seitenwände 8a und 8b des Kopfraums 5 einen Anschlag, um das Kippen und Anheben der Flasche 2 zu begrenzen. Statt eines Luftkanals 10 mit einem rechteckigen Querschnitt ist hier ein Luftkanal 10 mit einem runden Querschnitt vorgesehen. Beliebige Kombinationen von Luftkanälen 10 der Fig. 1 und 2 mit den Kopfraumquerschnitten aus Fig.1, 2 und 3 sind erfindungsgemäß möglich.

Der in Fig. 2 dargestellte Förderkanal 7 umfasst also zumindest den Kopfraum 5 mit seinen runden Seitenwänden 8a,8b sowie die Tragleisten 6a, 6b, die den Kopfraum nach unten begrenzen.

In Fig. 3a ist eine Detailvergrößerung des in Fig 1 dargestellten Luftförderers 1, insbesondere seines Kopfraums 5 gezeigt. Die Flasche 2 liegt mit dem Kragen 3 auf den seitlich angeordneten Tragleisten 6a und 6b auf und kann sich entlang der Tragleisten je nach Richtung der Luftströmung in dem Kopfraum 5 vor oder zurück bewegen. In den Seitenwänden 8a und 8b sind Luftschlitze, Luftdüsen oder sonstige Öffnungen 9 vorgesehen, die dazu geeignet sind, den Luftstrom gerichtet auf den Kopf 4 der Flasche 2 zu lenken. Durch die gerichtete Luftströmung kann so die Flasche 2 in Bewegung versetzt werden. Der Winkel 12 zwischen den Seitenwänden 8a und 8b beträgt in dem hier dargestellten Ausführungsbeispiel etwa 90°.

In Fig. 3a ist weiterhin zu erkennen, dass die seitlichen Tragleisten 6a und 6b in der Richtung quer zu dem Luftförderer im Wesentlichen horizontal angeordnet sind, so dass der Kragen 3 flächig auf den Tragleisten 6a und 6b aufliegt, falls sich die Flasche 2 senkrecht nach unten hängend befindet. Durch horizontal angeordnete Tragleisten wird insbesondere die Position der Flasche 2, bei der sie senkrecht nach unten hängt, stabilisiert.

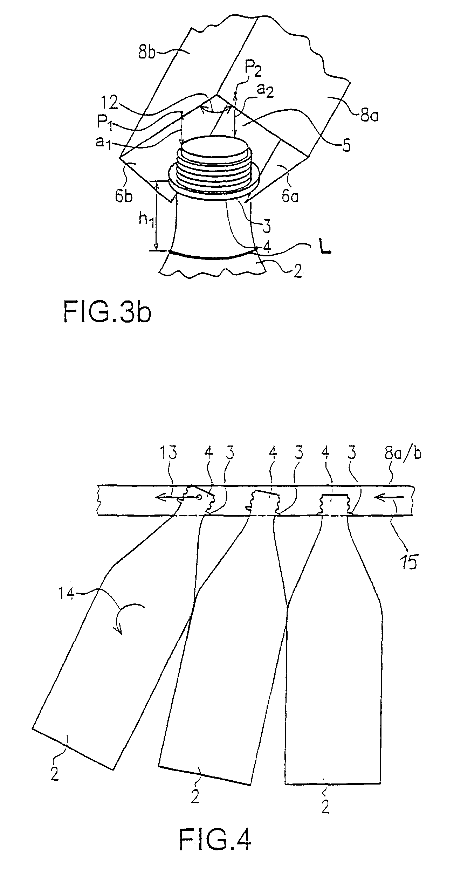

In Fig. 3b hingegen ist eine Ausführungsform der Erfindung dargestellt, bei der die Tragleisten 6a und 6b innen nach unten geneigt sind. Dadurch liegt der Kragen 3 nur punktförmig auf jeweils einer der Tragleisten 6a und 6b auf. Dadurch kann ein freies Hin- und Herpendeln der Flasche 2 erleichtert werden. Eine Kombination von geneigten Tragleisten 6a und 6b, wie in Fig. 3b dargestellt, mit gerundet geformten seitlichen Wandungen 8a und 8b, wie in Fig. 2 dargestellt, ist ebenfalls möglich.

In den Figuren 3a und 3b sind ausserdem die Maße eingezeichnet, die für die anschlagartige Auslegung des Kopfraumes 5 für eine jeweils zu transportierende Flasche 2 von Bedeutung sind. Es ist darauf zu achten, dass der Abstand a1 zwischen dem Kopf- bzw. Mündungsrand der Flasche bis zum Anschlagpunkt P1 bei senkrechter Anhubbewegung kleiner als die Flaschenhalslänge h1 ist, wobei die Flaschenhalslänge h1 hier den Abstand zwischen der Unterseite des Flaschenkragens 3 und einer gedachten Umfangslinie L am Flaschenhals an der Stelle, an der der Durchmesser des Flaschenhalses dem Abstand zwischen den Tragleisten 6a, 6b entspricht, bedeuted.

Ausserdem ist der Abstand a2 zwischen dem Mündungsrand und der Stelle an der Wandung des Kanals, an der der Kopf 4 bei einer Kippbewegung zum Anschlag im Punkt P2 kommt, so gewählt, dass das Anschlagen bei einem Winkel erfolgt, bei dem der sich erweiternde Flaschenhals noch nicht zum Anschlag an der Unterseite der Tragleisten 6a, 6b kommt.

Ein besonderer Vorteil des erfindungsgemäßen Luftförderers, der sich dadurch ergibt, dass die Luftdüsen 9 in den schrägen Seitenwänden 8a und 8b des Kopfraums 5, also in Höhe des Kopfes 4 der Flaschen 2 angeordnet sind, ist in Fig. 4 dargestellt, wobei die Transportrichtung durch den Pfeil 15 angegeben ist. Bei Stauungen von Flaschen 2 in dem Luftförderer 1 kommt es oftmals zu einer Auffächerung der Flaschen, wie sie in Fig. 4 dargestellt ist. Durch ein Bremsen der Flaschen 2 mit dem Kragen 3 auf den Tragleisten 6a, 6b wird der Körper der Flasche 2, im Vergleich zu seinem Kopfteil 4 nach vorne ausgelenkt. Dies wird insbesondere durch nachfolgende Flaschen 2 unterstützt, die jeweils mit ihren Körpern aufeinander drücken. Dadurch, dass der antreibende Luftstrom im Bereich des Kopfes 4 der Flaschen angreift, wird auf den Kopf 4 eine Kraft in Richtung des Pfeils 13 ausgeübt, wodurch sich ein richtendes Drehmoment 14 für die Flaschen 2 ergibt. Dieses richtende Drehmoment führt zu einer Auflösung von derartigen Stauungen, wie sie in Fig. 4 dargestellt sind, was somit für den Dauerbetrieb eines derartigen Luftförderers von großem Vorteil ist. Falls sich derartige Stauungen nicht selbst auflösen, muss manuell eingegriffen werden, was mit Verzögerungen bei der Produktion und dem Anhalten von kontinuierlich durchlaufenden Maschinen verbunden sein kann. Daher ist eine Stauselbstauflösung, wie sie in Fig. 4 beschrieben ist, von großem Vorteil.

Dieser Vorteil ergibt sich besonders durch die Ausgestaltung des luftführenden Kopfraums 5 als Anschlag für die Flaschen 2. Durch die Ausgestaltung als Anschlag ist der Querschnit der Kopfraums 5 flächenmäßig relativ klein, wodurch sich bei Stauungen eine deutliche Druckerhöhung vor dem Flaschenkopf ergibt, weil die Luft durch den engen Querschnitt nicht durch den Kopfraum 5 weiterströmen kann. Also gerade bei Stauungen wirkt durch den engen Querschnitt eine besonders hohe stauauflösende Kraft auf die Flaschen.

Alternativ zu der Anordnung der Luftdüsen 9 allein in den Seitenwänden 8a und 8b, können Luftdüsen 9 zusätzlich auch in jedem anderen den Kopfraum 5 begrenzenden Teil angeordnet sein. Dies ist beispielsweise in Fig. 2 dargestellt, bei der auch Luftdüsen in dem die gewölbten Seitenwände 8a, 8b verbindenden oberen Teil des Kopfraums 5 dargestellt sind.

In den in Fig. 1, 2 und 3 dargestellten Ausführungsbeispielen sind die Seitenwände 8a und 8b aus einem zusammenhängenden Teil bzw. einstückig vorgesehen. In Fig. 1 ist dies beispielsweise ein Winkel, dessen Schenkel die Seitenwände 8a und 8b bilden. In Fig. 2 ist ein Teil eines Rohres verwendet, um den Kopfraum 5 nach oben hin zu begrenzen. Dadurch, dass die Seitenwände 8a und 8b aus einem einzigen Teil gefertigt sind, werden etwaige Hygieneprobleme, die durch Ritzen und Spalten im Bereich des Kopfraums entstehen, vermieden. Auch eine Reinigung derartiger wenig verwinkelter Kopfräume ist äußerst leicht möglich.

Die Seitenwände in Fig. 1 können beispielsweise aus einem vorgefertigten Winkelprofil hergestellt sein. Auch ist es möglich, die Wandungen 8a und 8b getrennt voneinander herzustellen, und anschließend im oberen Bereich des Winkels 12 zu verschweißen.

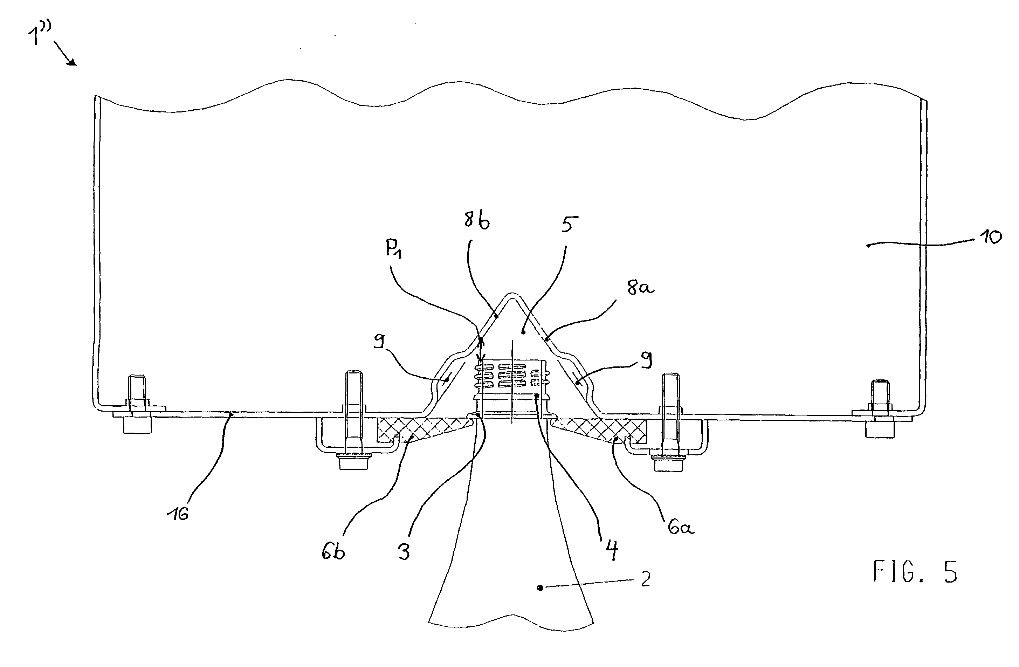

Für die in der Getränkeindustrie besonders häufig verwendeten PET-Flaschen mit einem Kopfdurchmesser von 25 mm und einer Kopfhöhe einschließlich des Kragens von 21 mm (Form PCO 28) ergibt folgende Geometrie des Kopfraums 5 nach Fig. 3a eine optimale Transportfunktion: Der Winkel 12 zwischen den Seitenwänden 8a und 8b beträgt 70° und die Höhe des Kopfraums 5 über der horizontalen Auflagefläche der Tragleisten 6a, 6b beträgt 45,5 mm. Hierdurch stellt sich ein Abstand a1 von ca. 6,2 mm ein. Ein derartiger Luftförderer 1" ist detailliert in Figur 5 dargestellt.

Bei dem Luftförderer 1" nach Figur 5 sind die beiden schrägen Seitenwände 8a, 8b einstückig mit einem ansonsten ebenen, horizontalen Bodenteil 16 des Luftkanals 10 gefertigt. Auch diese Maßnahme trägt zu niedrigen Fertigungskosten und einer spaltfreien, hygienischen Bauweise bei. Am Bodenteil 16, das auf gleicher Höhe liegt wie der Halskragen 3 der Flaschen 2, sind an der Unterseite die Tragleisten 6a, 6b mittels Schrauben und Halteklammern lösbar befestigt.

Die Luftdüsen 9 sind bei dieser Ausführungsform auf denjenigen Teil des Kopfraums 5 beschränkt, der unter dem Anschlagpunkt P1 liegt. Hierdurch ergibt sich eine absolut glatte, durchgehende Anschlagfläche für den Flaschenkopf 4 und ein hängenbleiben der Flaschen wird zuverlässig vermieden.

## Patentansprüche

1. Luftförderer (1) zum Transport von Gegenständen (2) mit einem Kragen (3) und einem darüber befindlichen Kopf (4), insbesondere von Kunststoffflaschen, entlang eines Förderkanals (7) mit zwei entlang des Förderkanals angeordneten Tragleisten (6a, 6b), auf denen die Gegenstände am Kragen hängend transportiert werden, mit entlang des Förderkanals angeordneten Luftdüsen (9) zur Beaufschlagung der Gegenstände mit Luft, sowie mit einem oberhalb der Tragleisten ausgebildeten Kopfraum (5) mit schrägen Seitenwänden (8a, 8b), **dadurch gekennzeichnet, dass** die Luftdüsen (9) in den schrägen Seitenwänden (8a, 8b) des Kopfraums (5) vorgesehen sind und den Kopf (4) der Gegenstände (2) beaufschlagen und daß die schrägen Seitenwände (8a, 8b) als Auschlag zur Begrenzung des Anhebens oder Kippens der Flaschen (2) dienen.

2. Luftförderer nach Anspruch 1, **dadurch gekennzeichnet, dass** die schrägen Seitenwände (8a, 8b) des Kopfraums (5) mit den Luftdüsen (9) innen glatt ausgebildet sind.

3. Luftförderer nach Anspruch 1 oder 2, **dadurch gekennzeichnet, dass** die schrägen Seitenwände (8a, 8b) mit den Luftdüsen (9) als Anschläge zur Begrenzung des Anhebens oder Kippens der Gegenstände (2) ausgebildet sind.

4. Luftförderer nach einem der Ansprüche 1 bis 3, **dadurch gekennzeichnet, dass** der Kopfraum (5) dachförmig ausgebildet ist.

5. Luftförderer nach einem der Ansprüche 1 bis 3, **dadurch gekennzeichnet, dass** der Kopfraum (5) rautenförmig ausgebildet ist.

6. Luftförderer nach einem der Ansprüche 1 bis 3, **dadurch gekennzeichnet, dass** der Kopfraum (5) kreissegmentförmig ausgebildet ist.

7. Luftförderer nach einem der Ansprüche 1 bis 6, **dadurch gekennzeichnet, dass** ein Luftzufuhrkanal (10) zur Versorgung der Luftdüsen (9) mit Blasluft seitlich und oberhalb des Kopfraums (5) angeordnet ist.

8. Luftförderer nach einem der Ansprüche 1 bis 7, **dadurch gekennzeichnet, dass** die Tragleisten (6a, 6b) im wesentlichen horizontal angeordnet sind.

9. Luftförderer nach Anspruch 4, **dadurch gekennzeichnet, dass** der Winkel (12) zwischen den schrägen Seitenwänden (8a, 8b) ca. 70 Grad und die Höhe des Kopfraums (5) ca. 45,5 Millimeter entspricht.

10. Luftförderer nach einem der Ansprüche 1 bis 9, **dadurch gekennzeichnet, dass** die untere Begrenzung (16) des Förderkanals (7) bzw. des Luftzufuhrkanals (10) auf Höhe des Kragens (3) der Gegenstände (2) liegt und die Tragleisten (6a, 6b) an der im wesentlichen horizontalen Unterseite der Begrenzung (16) befestigt sind.

11. Luftförderer nach einem der Ansprüche 1 bis 10, **dadurch gekennzeichnet, dass** die Luftdüsen (9) in denjenigem Bereich des Kopfraums (5) angeordnet sind, der unter dem Anschlagpunkt (P1) des Kopfs (4) an den schrägen Seitenwänden (8a, 8b) liegt.

## Claims

1. Pneumatic conveyor (1) for conveying objects (2), with a collar (3) and a head (4) mounted over it, these objects including plastic bottles in particular, along a conveyor duct (7) with two support strips (6a, 6b) arranged along the conveyor duct, on which strips the objects are conveyed, suspended on the collar, with air nozzles (9) arranged along the conveyor duct, and with a head space (5) formed above the support strips, with oblique lateral walls (8a, 8b), **characterised in that** the air nozzles (9) are provided in the oblique lateral walls (8a, 8b) of the head space (5), and load the head (4) of the objects (2).

2. Pneumatic conveyor according to Claim 1, **characterised in that** the oblique lateral walls (8a, 8b) of the head space (5) are designed with the air nozzles (9) arranged flush inside.

3. Pneumatic conveyor according to Claim 1 or 2, **characterised in that** the oblique lateral walls (8a, 8b) with the air nozzles (9) are designed as stops for limiting the raising or tipping of the objects (2).

4. Pneumatic conveyor according to one of Claims 1 to 3, **characterised in that** the head space (5) is designed in the form of a roof, and **in that** the oblique lateral walls (8a, 8b) serve as stops for limiting the raising or tipping of the bottles (2).

5. Pneumatic conveyor according to one of Claims 1 to 3, **characterised in that** the head space (5) is of lozenge-shaped design.

6. Pneumatic conveyor according to one of Claims 1 to 3, **characterised in that** the head space (5) is designed in the form of a circle segment.

7. Pneumatic conveyor according to one of Claims 1 to 6, **characterised in that** an air supply duct (10) for supplying the air nozzles (9) with blown air is arranged on the side of and above the head space (5).

8. Pneumatic conveyor according to one of Claims 1 to 7, **characterised in that** the support strips (6a, 6b) are arranged essentially horizontally.

9. Pneumatic conveyor according to Claim 4, **characterised in that** the angle (12) between the oblique lateral walls ()8a, 8b) is approximately 70 degrees and the height of the head space (5) is approx. 45.5 millimetres.

10. Pneumatic conveyor according to one of Claims 1 to 9, **characterised in that** the lower limit (16) of the conveyor duct (7) and of the air supply duct (10) lies at the same level of the collar (3) of the objects (2), and **in that** the support strips (6a, 6b) are secured to the essentially horizontal bottom of the limit (16).

11. Pneumatic conveyor according to one of Claims 1 to 10, **characterised in that** the air nozzles (9) are arranged in the area of the head space (5) which lies under the stop point (P1) of the head (4) on the oblique lateral walls (8a, 8b).

## Revendications

1. Convoyeur pneumatique (1) pour transporter des objets (2) comportant un col (3) et une tête (4) située au-dessus de celui-ci, en particulier des bouteilles en plastique, le long d'un canal de convoyage (7) constitué de deux barres de support (6a, 6b) disposées le long du canal de convoyage et sur lesquelles les objets sont transportés suspendus par le col, avec des buses d'air (9) disposées le long du canal de convoyage et destinées à apporter de l'air aux objets ainsi que d'un espace de tête (5) disposé au-dessus des barres de support et dont les parois latérales (8a, 8b) sont obliques,
**caractérisé en ce que**
les buses d'air (9) sont prévues dans les parois latérales (8a, 8b) obliques de l'espace de tête (5) et agissent sur la tête (4) des objets (2), et les parois latérales (8a, 8b) obliques servent de butée qui limitent le soulèvement ou le basculement des bouteilles (2).

2. Convoyeur pneumatique selon la revendication 1,
**caractérisé en ce que**
les parois latérales (8a, 8b) obliques de l'espace de tête (5) munies des buses d'air (9) sont lisses à l'intérieur.

3. Convoyeur pneumatique selon la revendication 1 ou 2,
**caractérisé en ce que**
les parois latérales (8a, 8b) obliques munies des buses d'air (9) prennent la forme de butées qui limitent le soulèvement ou le basculement des objets (2).

4. Convoyeur pneumatique selon l'une des revendications 1 à 3,
**caractérisé en ce que**
l'espace de tête (5) a une forme de toit.

5. Convoyeur pneumatique selon l'une des revendications 1 à 3,
**caractérisé en ce que**
l'espace de tête (5) a une forme de losange.

6. Convoyeur pneumatique selon l'une des revendications 1 à 3,
**caractérisé en ce que**
l'espace de tête (5) a une forme de segment de cercle.

7. Convoyeur pneumatique selon l'une des revendications 1 à 6,
**caractérisé en ce qu'**
un canal d'apport d'air (10), destiné à alimenter les buses d'air (9) en air de soufflage, est placé à côté et au-dessus de l'espace de tête (5).

8. Convoyeur pneumatique selon l'une des revendications 1 à 7,
**caractérisé en ce que**
les barres de support (6a, 6b) sont disposées pratiquement à l'horizontale.

9. Convoyeur pneumatique selon la revendication 4,
**caractérisé en ce que**
l'angle (12) entre les parois latérales (8a, 8b) obliques est d'environ 70 degrés et la hauteur de l'espace de tête (5) est d'environ 45,5 millimètres.

10. Convoyeur pneumatique selon l'une des revendications 1 à 9,
**caractérisé en ce que**
la limite (16) inférieure du canal de convoyage (7) ou du canal d'apport d'air (10) se trouve au niveau du col (3) des objets (2) et les barres de support (6a, 6b) sont fixées au côté inférieur pratiquement horizontal de la limite (16).

11. Convoyeur pneumatique selon l'une des revendications 1 à 10,
**caractérisé en ce que**
les buses d'air (9) sont disposées dans la zone de l'espace de tête (5) située au-dessous du point (Pl) où la tête (4) vient buter sur les parois latérales (8a, 8b) obliques.
